(19) Europäisches Patentamt
European Patent Office
Office européen des brevets

(11) EP 4 797 699 A1

(12) EUROPEAN PATENT APPLICATION
published in accordance with Art. 153(4) EPC

(43) Date of publication:
**26.08.2026 Bulletin 2026/35**

(21) Application number: **24880167.2**

(22) Date of filing: **18.10.2024**

(51) International Patent Classification (IPC):
***H04N 19/61*** (2014.01) ***H04N 19/625*** (2014.01)
***H04N 19/117*** (2014.01) ***H04N 19/176*** (2014.01)
***H04N 19/157*** (2014.01) ***H04N 19/70*** (2014.01)

(52) Cooperative Patent Classification (CPC):
**H04N 19/117; H04N 19/157; H04N 19/176; H04N 19/61; H04N 19/625; H04N 19/70**

(86) International application number:
**PCT/KR2024/015842**

(87) International publication number:
**WO 2025/084830 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.10.2023 KR 20230141005**

(71) Applicant: **Intellectual Discovery Co., Ltd.**
**Seoul 06236 (KR)**

(72) Inventor: **CHOI, Ki Ho**
**Yongin-si Gyeonggi-do 17104 (KR)**

(74) Representative: **Viering, Jentschura & Partner mbB**
**Patent- und Rechtsanwälte**
**Am Brauhaus 8**
**01099 Dresden (DE)**

# (54) VIDEO DECODING METHOD AND DEVICE, AND VIDEO ENCODING METHOD AND DEVICE

(57) A video decoding method of the present disclosure may determine, when the prediction mode information indicates that a prediction mode of the current block is inter prediction, the directionality of the current block based on at least one of the directionality of a coefficient acquired by performing a primary inverse transform on the transform block of the current block or the directionality of a neighboring pixel of the current block, determine a secondary transform set to be applied to the current block from among a plurality of secondary transform sets based on the directionality of the current block, determine a transform kernel applied to the current block from among a plurality of transform kernels included in the secondary transform set based on a secondary transform index, and perform a secondary inverse transform on the transform block using the transform kernel.

Template
T
Reconstructed area
Unavailable area
Current block
T
Window
T=3
Current block
ampl(ipm)
ipm

FIG.6



Processed by Luminess, 75001 PARIS (FR)

## Description

### TECHNICAL FIELD

The present disclosure relates to the field of video encoding and decoding. More specifically, the present disclosure relates to a method and device for performing a transform by selecting a transform kernel applied to a transform process, such as a primary transform and a secondary transform in consideration of a directionality included in any one of a coefficient, a neighboring pixel, and a predicted value of a current block.

### BACKGROUND ART

With the development and spread of hardware capable of playing and storing high-resolution or high-definition video content, the need for codecs that effectively encode or decode high-resolution or high-definition video content is increasing. Recently, methods for effectively compressing such high-resolution or high-definition video content have been implemented. Representative examples of codecs include high efficiency video coding (HEVC) and versatile video coding (VVC).

In HEVC, a single picture is split into a single or multiple tiles/slices, which are then split into multiple coding tree units (CTUs). VVC may first split a single picture into multiple sub-pictures. A subpicture is defined as a group of rectangular shaped slices and has been added to VVC to support a function of partially and independently encoding/decoding and transmitting a picture. A single subpicture may be split into tiles/slices similar to HEVC. In addition, a brick has been added to VVC as a new picture splitting structure. A brick is generated by splitting a tile horizontally and is a basic unit of parallel processing. In order to process a video with a higher resolution than HEVC, VVC uses a coding tree unit (CTU) having a maximum size of 256x256, which is 16 times larger than HEVC, as a basic unit of encoding/decoding.

As a transform and quantization technique, in HEVC, a single type of DCT-2 kernel is used for inter prediction coding, and a single type of DST-7 kernel is used for 4×4 blocks of intraprediction residual signals. In VVC, a primary transform is performed on an intra-predicted block, and a secondary transform is applied to coefficients in a low-frequency region of an upper-left) by using a transform kernel selected based on an intra prediction mode.

However, when the transform kernel for the secondary transform is selected based on the intra prediction mode, it is difficult to apply the secondary transform technique to blocks that do not have an intra prediction mode, such as inter-predicted blocks. Furthermore, the directionality of the transform kernel used for the secondary transform may differ from that of the intra prediction mode, which may result in inefficient compression even when the secondary transform is applied.

Accordingly, there is a need to design a method for selecting a transform kernel used for the secondary transform based on criteria other than the intra prediction mode, or to select an optimal transform kernel in a new manner in addition to the existing intra prediction mode.

### DISCLOSURE OF INVENTION

### TECHNICAL PROBLEM

An aspect of the present disclosure is to provide a video decoding method and device, and a video encoding method and device, which perform a transform by selecting a transform kernel applied to the transform in consideration of a directionality included in any one of a coefficient, a neighboring pixel, and a predicted value of a current block.

### TECHNICAL SOLUTION

According to embodiments of the present disclosure, there is provided a method and an apparatus for selecting a transform kernel used in transform processes such as Multiple Transform Selection (MTS), Low-Frequency Non-Separable Transform (LFNST), and Non-Separable Primary Transform (NSPT), by using a derived intra prediction mode obtained based on directionality included in at least one of coefficients of a current block, neighboring pixels, or prediction values.

A video decoding method according to one embodiment of the present disclosure may include acquiring prediction mode information on a current block; acquiring a transform block for the current block; determining, when the prediction mode information indicates that a prediction mode of the current block is inter prediction, the directionality of the current block based on at least one of the directionality of a coefficient acquired by performing a primary inverse transform on the transform block of the current block or the directionality of a neighboring pixel of the current block; determining a secondary transform set to be applied to the current block from among a plurality of secondary transform sets based on the directionality of the current block; determining a transform kernel applied to the current block from among

a plurality of transform kernels included in the secondary transform set based on a secondary transform index; and performing a secondary inverse transform on the transform block using the transform kernel.

In one embodiment, the determining of the directionality of the current block may include applying a predetermined filter for determining a directionality to the primary inverse transformed coefficient of the current block or to the neighboring pixels of the current block to determine a horizontal direction intensity and vertical direction intensity; acquiring a histogram of gradient (HoG) based on the horizontal direction intensity and vertical direction intensity; and determining an intra prediction mode corresponding to a gradient with a highest frequency in the histogram of gradient as an intra prediction mode indicating the directionality of the current block.

In one embodiment, the Sobel filter is a one-dimensional filter having coefficients of {1, 2, 1} or {-1, -2, -1}, or a two-dimensional filter having coefficients of {{1, 0, -1}, {2, 0, -2}, {1, 0, -1}} or {{-1, -2, -1}, {0, 0, 0}, {1, 2, 1}}.

In one embodiment, the determining of the directionality of the current block determines a template-based intra mode derivation (TIMD) intra prediction mode having a smallest sum of absolute transformed differences (SATD) from among TIMD intra prediction modes derived based on TIMD as an intra prediction mode indicating the directionality of the current block.

In one embodiment, the determining of the directionality of the current block acquires an occurrence histogram (OG) of intra prediction modes of pixels included in blocks at predetermined locations from among spatially neighboring blocks of the current block, and determines an intra prediction mode corresponding to a largest occurrence histogram as an intra prediction mode indicating the directionality of the current block.

In one embodiment, the determining of a secondary transform set to be applied to the current block comprises: determining an intra prediction mode corresponding to the directionality of the current block; and determining one secondary transform set among a plurality of preset secondary transform sets according to the intra prediction mode.

In one embodiment, the determining of one of a plurality of preset secondary transform sets according to the intra prediction mode determines, when intra prediction modes consisting of 67 from 0 to 66 are included and 35 secondary transform sets from 0 to 34 are included, secondary transform set 2 for intra prediction modes below 0, determines a secondary transform set with the same number as the intra prediction mode number for intra prediction modes from 0 to 34, and determines a secondary transform set of (68-intra prediction mode) for intra prediction modes from 35 to 66.

In one embodiment, each of the plurality of secondary transform sets comprises three transform kernels, and further comprises: acquiring a transform kernel index indicating one of three transform kernels from a bitstream; and determining a transform kernel to be applied to the current block from among the three transform kernels based on the acquired transform kernel index.

In one embodiment, the video decoding method further comprises: determining, when the prediction mode information indicates that a prediction mode of the current block is intra prediction, the directionality of the current block based on at least one of the directionality of a coefficient acquired by performing a primary inverse transform on the transform block of the current block or the directionality of a neighboring pixel of the current block; determining a secondary transform set to be applied to the current block from among a plurality of secondary transform sets based on the intra prediction mode of the current block and the directionality of the current block; determining a transform kernel applied to the current block within the secondary transform set based on a secondary transform index; and performing a secondary inverse transform on the transform block using the transform kernel.

In one embodiment, the determining of a secondary transform set to be applied to the current block comprises:

acquiring, when an intra prediction mode of the current block is predModeIntra, an intra prediction mode having a most similar directionality to the directionality of the current block is derivedModeIntra, and a predetermined weight is w, an index indicating a combination of the intra prediction mode of the current block and the directionality of the current block according to the following equation: index = w * predModeIntra (1 - w) * derivedModeIntra, and determining a secondary transformation set to be applied to the current block from among a plurality of preset secondary transformation sets based on the index.

In one embodiment, the weight w is a preset value or is set based on at least one of a size, shape, quantization parameter (QP), slice type, and intra prediction mode value of the current block, and primary transform information applied to the current block.

A video ending method according to one embodiment of the present disclosure may include acquiring a predicted value for a current block; acquiring a residual block for the current block based on the predicted value; performing a primary transform on the residual block; and performing a secondary transform on a result value acquired through the primary transform, and wherein the performing of the secondary transform comprises: determining, when a prediction mode of the current block is inter prediction, the directionality of the current block based on at least one of the directionality of a coefficient acquired by performing a primary transform on the residual block or the directionality of a neighboring pixel of the current block; determining a secondary transform set to be applied to the current block from among a plurality of secondary transform sets based on the directionality of the current block; determining a transform kernel applied to the current block within the secondary transform set based on a secondary transform index; and performing a secondary transform on the transform block using the transform kernel.

According to an embodiment of the present disclosure, a video decoder and a video encoder for performing the above-described video decoding method and video encoding method may be provided. The video decoder and the video encoder may include at least one processor and a memory, wherein the memory may store instructions for executing the above-described methods, and the at least one processor may perform operations according to the instructions.

Meanwhile, at least some of the steps of the above methods may be implemented as a computer-readable recording medium having recorded thereon a program for execution by a computer, and may also be provided as the program itself.

## ADVANTAGEOUS EFFECTS

According to the present disclosure, the compression efficiency of a video may be improved because a more suitable transform kernel can be determined according to image characteristics.

## BRIEF DESCRIPTION OF THE DRAWINGS

FIG. 1 is a block diagram showing an encoding apparatus according to one embodiment of the present disclosure.
FIG. 2 is a diagram showing a block partitioning method according to one embodiment of the present disclosure.
FIGS. 3 and 4 are drawings for explaining embodiments for an intra prediction method.
FIG. 5 is a block diagram showing a decoding apparatus according to one embodiment of the present disclosure.
FIG. 6 is a diagram showing a process of deriving an intra prediction mode of a current block using DIMD according to one embodiment of the present disclosure.
FIG. 7 is a diagram showing an example of neighboring blocks used to derive an intra prediction mode of a current block using OBIC according to one embodiment of the present disclosure.
FIG. 8 is a diagram showing a process of deriving an intra prediction mode of a current block using intra template matching according to one embodiment of the present disclosure.
FIG. 9 is a flowchart of a video encoding method according to one embodiment of the present disclosure.
FIG. 10 is a flowchart of a video decoding method according to one embodiment of the present disclosure.

## BEST MODE FOR CARRYING OUT THE INVENTION

Hereinafter, a method and an apparatus of encoding and decoding a video according to an embodiment of the present disclosure will be described in detail with reference to the accompanying drawings.

In describing embodiments of the present disclosure below, a detailed description of related known configurations or functions incorporated herein will be omitted when it is determined that the detailed description thereof may unnecessarily obscure the subject matter of the present disclosure. Furthermore, the terms described below are terms defined in consideration of the functions in embodiments of the present disclosure, and may vary depending on the intention or custom of the user or operator. Therefore, the terms will be defined throughout the description of the present disclosure.

In addition, in order to efficiently describe technical elements constituting embodiments of the present disclosure, according to preferred embodiments of the present disclosure to be implemented below, functional components that are already provided in each system or functional components that are commonly provided in the technical field to which the present disclosure belongs will be omitted as much as possible, and functional components that must be additionally provided for the present disclosure will be mainly described.

Anyone skilled in the art will easily understand the functions of elements that have been conventionally used among the functional components that are omitted and not shown below, and also clearly understand the relationship between the elements that have been omitted as described above and the elements added for the present disclosure.

In the present disclosure, an apparatus that encodes a video to generate a video signal bitstream is referred to as an encoding apparatus, or an encoder, and an apparatus that decodes a video signal bitstream to restore a video is referred to as a decoding apparatus, or a decoder.

A pixel or pel is a smallest unit that constitutes a video, and the terms pixel and sample may be used interchangeably. A sample may generally represent a pixel or a pixel value, or may represent only a pixel or pixel value of the luma component, or only a pixel or pixel value of the chroma component.

Additionally, a unit is used to refer to a basic unit of video processing or a specific location of a picture, and represents an image area including at least one of a luminance component and a chrominance component. Specifically, a unit may be used as a concept including all of a coding tree unit (CTU), a coding unit (CU), a prediction unit (PU), and a transform unit (TU). In the present disclosure, a unit may be referred to as a unit of measurement. Furthermore, a block

represents an image area including a specific component among luminance components and chrominance components, and an MxN block may represent a set of samples or transform coefficients consisting of M columns and N rows. Here, the terms unit, block, partition, unit of measurement, signal and area may be used interchangeably.

Meanwhile, a picture refers to a field or a frame, and the terms may be used interchangeably. For example, when the video is an interlaced scanning video, one frame is divided into an odd (or odd, top) field and an even (or even, bottom) field, and each field consists of one picture unit to be encoded or decoded. Furthermore, when the video is a progressive scanning video, one frame consists of a picture to be encoded or decoded.

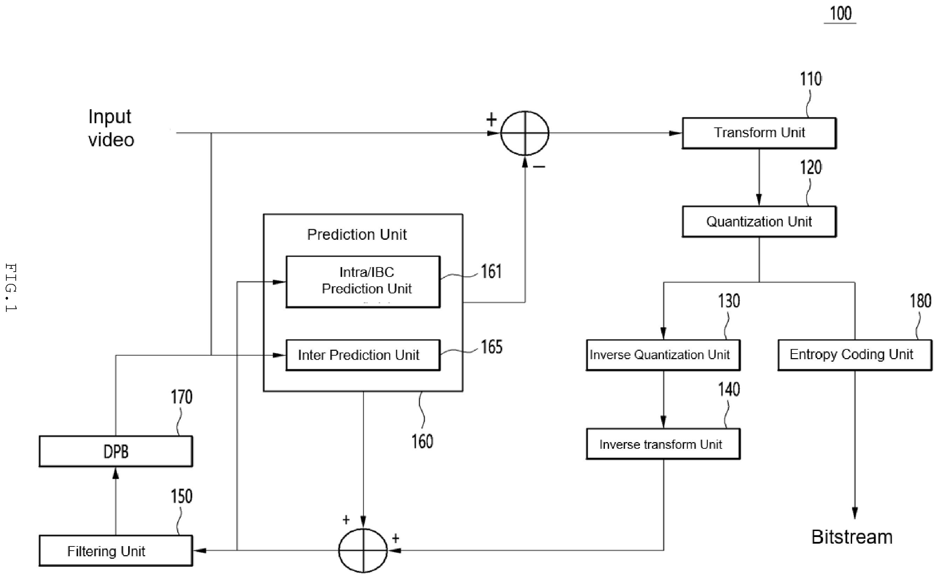

FIG. 1 is a block diagram showing an encoding apparatus according to one embodiment of the present disclosure, which aims to explain a configuration and operation of a video encoder for encoding a video.

Referring to FIG. 1, the video encoder 100 may be configured to include a transform unit 110, a quantization unit 120, an inverse quantization unit 130, an inverse transform unit 140, a filtering unit 150, a prediction unit 160, a decoded picture buffer (DPB) 170, and an entropy coding unit 180.

The transform unit 110 transforms a residual signal, which is a difference between an input video signal and a prediction signal generated by the prediction unit 160, to acquire a transform coefficient value.

For example, a discrete cosine transform (DCT), a discrete sine transform (DST), or a wavelet transform may be used.

A transform kernel used for a transform on a residual block may be a transform kernel having separable characteristics of a vertical transform and a horizontal transform. In this case, the transform for the residual block may be performed separately into a vertical transform and a horizontal transform. For example, the encoder may perform a vertical transform by applying a transform kernel in a vertical direction of the residual block. In addition, the encoder may perform a horizontal transform by applying a transform kernel in a horizontal direction of the residual block.

Meanwhile, the transform kernel may be used as a term referring to a set of parameters used for transforming the residual signal, such as a transform matrix, a transform array, a transform function, or a transform, and may be any one of a plurality of available kernels, and transform kernels based on different transform types may be used for each of the vertical transform and the horizontal transform.

The transform coefficients may be distributed such that higher coefficients are distributed toward an upper left of the block, and coefficients closer to '0' are distributed toward a lower right of the block. Additionally, as a size of the current block increases, there is a possibility that there will be a lot of coefficients of '0' in a lower right area, and in order to reduce the transform complexity of a large block, only an arbitrary upper left area may be left and the remaining area may be reset to '0'.

Additionally, error signals may exist only in some areas in a coding block, and in this case, the transform process may be performed only for some arbitrary areas. For example, in a block having a size of 2Nx2N, an error signal may exist only in a first 2NxN block, and in this case, the transform process may be performed only on the first 2NxN block, but the second 2NxN block may not be encoded or decoded withing performing the transform process.

The encoder may perform an additional transform prior to quantizing the transform coefficient. The foregoing transform method may be referred to as a primary transform, and the additional transform may be referred to as a secondary transform.

The secondary transform may be optional for each residual block, for example, the encoder may perform the secondary transform for an area where it is difficult to concentrate energy in a low-frequency area using only the primary transform to improve coding efficiency.

Specifically, the secondary transform may be additionally performed on blocks in which residual values appear significantly in directions other than a horizontal or vertical direction of the residual block, and the secondary transform may not be performed separately into a vertical transform and a horizontal transform, unlike the primary transform. The foregoing second-order transform may be referred to as a low frequency non-separable transform (LFNST).

The quantization unit 120 quantizes a transform coefficient value output from the transform unit 110.

In order to increase coding efficiency, instead of coding a picture signal as it is, a method of predicting a picture using an area already coded through the prediction unit 160, and acquiring a restored picture by adding a residual value between the original picture and the prediction picture to the predicted picture is used.

In order to avoid mismatches between the encoder and decoder, when performing prediction in the encoder, information available in the decoder must also be used, and to this end, the encoder may perform a process of restoring the encoded current block again.

The inverse quantization unit 130 inverse quantizes the transform coefficient value, and the inverse transform unit 140 restores a residual value using the inverse quantized transform coefficient value.

The filtering unit 150 performs filtering operations using a deblocking filter, a sample adaptive offset (SAO), an adaptive loop filter (ALF), and the like, to improve the quality of the restored picture and enhance encoding efficiency.

The deblocking filter is a filter for removing distortion within a block generated at a boundary between blocks in the restored picture, in which the encoder may determine whether to apply the deblocking filter to the corresponding boundary based on a distribution of pixels included in several columns or rows with respect to an arbitrary boundary within a block.

When the deblocking filter is applied, the filtering unit 150 may apply a long filter, a strong filter, or a weak filter depending on a deblocking filtering strength, and may process horizontal filtering and vertical filtering in parallel.

The sample adaptive offset (SAO) may be used to correct an offset from the original video on a pixel-by-pixel basis for the residual block to which the deblocking filter is applied. The filtering unit 150 may use a method of dividing pixels included in a video into a predetermined number of areas to correct an offset for a specific picture, then determining an area to perform offset correction, and applying the offset to the corresponding area (Band Offset). Additionally, the filtering unit 150 may use a method of applying an offset in consideration of the edge information of each pixel (Edge Offset).

The adaptive loop filter (ALF) is a method of dividing pixels included in a video into predetermined groups, then determining one filter to be applied to the corresponding group, and performing filtering differentially for each group. Information regarding whether to apply an adaptive loop filter may be signaled on a coding unit basis, and the shape and filter coefficient of the ALF filter to be applied may vary according to each block. In addition, the same form of adaptive loop filter may be applied regardless of the characteristics of a target block to be applied.

The filtered picture may be stored in the DPB 170 to be used as a reference picture.

The prediction unit 160 includes an intra/IBC prediction unit 161 and an inter prediction unit 165, in which the intra/IBC prediction unit 161 performs intra prediction and IBC prediction within a current picture, and the inter prediction unit 165 performs inter prediction to predict a current picture using the reference picture stored in the DPB 170.

The intra/IBC prediction unit 161 performs intra prediction from restored areas within the current picture to transmit intra encoding information to the entropy coding unit 180. Here, the intra encoding information may include at least one of an intra prediction mode, a most probable mode (MPM) flag, an MPM index, and information on a reference sample.

Additionally, the intra/IBC prediction unit 161 may perform intra block copy (IBC) prediction from restored samples within the current picture to transmit IBC encoding information to the entropy coding unit 180.

In this case, the intra/IBC prediction unit 161 may acquire a block vector value indicating a reference area used for prediction of a current area by referring to a specific area within the current picture, and perform IBC prediction using the acquired block vector value.

The intra/IBC prediction unit 161 may transmit IBC encoding information including at least one of size information of the reference area and block vector information (index information for block vector prediction of the current block within a motion candidate list, block vector difference information) to the entropy coding unit 160.

The inter prediction unit 165 finds a portion most similar to the current area by referring to a specific area of the restored reference picture, acquires a motion vector value that is a distance between the areas, and transmits motion information (reference direction indication information (L0 prediction, L1 prediction, bidirectional prediction), reference picture index, motion vector information, etc.) for the acquired reference area to the entropy coding unit 180.

In addition, the inter prediction unit 165 performs motion compensation using motion information to generate a prediction block for the current block, and transmits inter encoding information including motion information for the reference area to the entropy coding unit 180.

Meanwhile, the quantized transform coefficients in the form of a two-dimensional array may be rearranged into a one-dimensional array for entropy coding.

A method of scanning the quantized transform coefficients may be determined according to a size of the transform block and an intra prediction mode, and diagonal, vertical, and horizontal scans may be applied, and the scan information may be signaled on a block-by-block basis or derived from the decoder according to a set rule.

The entropy coding unit 180 generates a bitstream by entropy coding information indicating quantized transform coefficients, intra encoding information, and inter encoding information, and to this end, a variable length coding (VLC) method and an arithmetic coding method may be used.

The variable length coding (VLC) transforms input symbols into a sequence of codewords, in which lengths of the codewords may be variable. For example, frequently occurring symbols may be represented with short codewords, and infrequently occurring symbols may be represented with long codewords.

As a variable length coding method, a context-based adaptive variable length coding (CAVLC) method may be used.

Arithmetic coding transforms consecutive data symbols into a single prime number using the probability distribution of each data symbol, thereby obtaining optimal prime number bits required to express each symbol.

As an arithmetic coding method, a context-based adaptive binary arithmetic code (CABAC) method may be used.

The CABAC is a method of binary arithmetic encoding through multiple context models generated based on probabilities obtained through experiments. The context model may also be called a context model. First, when the symbols are not in a binary form, the encoder binarizes each symbol using exp-Golomb, or the like. The binarized 0 or 1 may be described as a bin.

A CABAC initialization process is divided into context initialization and arithmetic coding initialization. The context initialization, which is a process of initializing the occurrence probability of each symbol, is determined by a type of symbol, a quantization parameter (QP), and a slice type I, P, B. The context model having initialization information may use

probability-based values obtained through experiments.

The context model provides the probability of occurrence of a least probable symbol (LPS) or most probable symbol (MPS) for a symbol currently being coded, and information (valMPS) on which empty value between 0 and 1 corresponds to the MPS.

One of multiple context models may be selected through a context index (ctxIdx), and the context index may be derived through information of a block currently to be encoded or information of surrounding blocks.

Initialization for binary arithmetic coding is performed based on a probability model selected from the context model. Binary arithmetic encoding proceeds with encoding through a process of splitting the data into probability intervals based on the occurrence probabilities of 0 and 1, and then allowing a probability interval corresponding to a bin to be processed to be an entire probability interval for a bin to be processed next.

The location information within the probability interval where the last bin has been processed is output. However, since the probability interval cannot be split infinitely, when it is reduced to a predetermined size, a renormalization process is performed to expand the probability interval and output the corresponding location information. Additionally, subsequent to processing each bin, a probability update process may be performed in which a probability for a bin to be processed next is newly set through information on the processed bin.

A bitstream generated from the video encoder is encapsulated into network abstraction layer (NAL) units as basic units.

The NAL units may be divided into video coding layer (VCL) NAL units including video data and non-VCL NAL units including parameter information for decoding the video data, and there may be various types of VCL or non-VCL NAL units.

A NAL unit consists of NAL header information and data called a raw byte sequence payload (RBSP), and the NAL header information includes summary information on the RBSP. The RBSP of a VCL NAL unit includes an integer number of coding tree units.

In order to decode a bitstream in the decoder, the bitstream must first be separated into NAL units, and then each separated NAL unit must be decoded. Meanwhile, information items required for decoding a bitstream may be transmitted as being included in a picture parameter set (PPS), a sequence parameter set (SPS), a video parameter set (VPS), or the like.

Meanwhile, the configuration and operation of the encoder described with reference to FIG. 1 are according to one embodiment of the present disclosure, and some configurations may be omitted or added as needed.

Additionally, a single picture may be encoded by being segmented into sub-pictures, slices, tiles, and the like. A subpicture may include one or more slices or tiles. When a single picture is encoded by being segmented into multiple slices or tiles, all slices or tiles within the picture must be decoded prior to being displayed on the screen.

When a single picture is encoded into multiple sub-pictures, only an arbitrary sub-picture may be decoded and displayed on the screen. A slice may include multiple tiles or sub-pictures, and a tile may include multiple sub-pictures or slices.

Sub-pictures, slices, and tiles may be encoded or decoded independently of one another so as to be effective in improving parallel processing and processing speed, but a number of bits may increase because the encoded information of other adjacent sub-pictures, other slices, and other tiles cannot be used.

Furthermore, sub-pictures, slices, and tiles may be encoded by being segmented into multiple coding tree units (CTUs).

The coding tree unit may consist of a luma coding tree block (CTB) having a size of 128x128 and two chroma coding tree blocks having a size of 64x64.

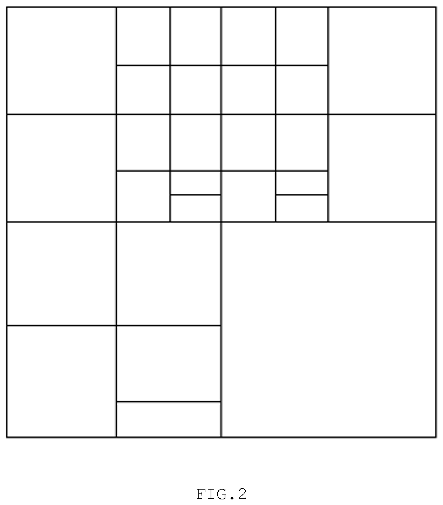

A single coding tree unit may constitute a single coding unit (CU) itself without being segmented, or may be segmented into multiple coding units as shown in FIG. 2. A coding unit may consist of a luma coding block (CB) and two chroma coding blocks.

A single coding unit may consist of one transform unit (TU), or may be segmented into multiple transform units. The transform unit may consist of a luma transform block (TB) and two chroma transform blocks.

Here, the coding unit represents a basic unit for processing a picture in the process of prediction, transform, quantization, entropy coding, and decoding, and a size and shape of a coding unit within a picture may not be constant.

The coding unit may have a square or non-square shape, and a non-square coding unit may include a vertical coding unit having a height greater than a width and a horizontal coding unit having a width greater than a height.

The coding tree unit is first segmented into a quad tree (QT) structure, so that one node with a size of 2Nx2N may be segmented into four nodes with a size of NxN. Meanwhile, quad tree segmentation may be performed recursively, and not all nodes need to be segmented to the same depth.

A leaf node of a quad tree can be further segmented into a multi-type tree (MTT) structure. For example, in a multi-type tree structure, a single node may be segmented into a binary or ternary tree structure with horizontal or vertical segmentation. Accordingly, there may be four segmentation structures in a multi-type tree structure, such as vertical binary segmentation, horizontal binary segmentation, vertical ternary segmentation, and horizontal ternary segmentation.

In each tree structure, both the width and height of a node may both have values that are power of 2. For example, in a binary tree (BT) structure, a node having a size of 2Nx2N may be segmented into two Nx2N nodes by vertical binary segmentation, and into two 2NxN nodes by horizontal binary segmentation.

In addition, in a ternary tree (TT) structure, a node having a size of 2Nx2N may be segmented into nodes having sizes of (N/2)x2N, Nx2N, and (N/2)x2N by vertical ternary segmentation, and segmented into nodes having sizes of 2Nx(N/2), 2NxN, and 2Nx(N/2) by horizontal ternary segmentation. Such multi-type tree segmentation may be performed recursively.

A leaf node of a multi-type tree may be a coding unit, and when the coding unit is not larger than a maximum transform length, the corresponding coding unit may be used as a unit of prediction and transform without further segmentation. Meanwhile, when a width or height of a coding unit is greater than the maximum transform length, the corresponding coding unit may be segmented into a plurality of transform units without explicit signaling regarding segmentation.

The foregoing tree segmentation structure may have the same shape (single tree) for the luma block and the chroma block, or different shapes (dual trees) for the luma block and the chroma block.

Meanwhile, the foregoing block segmentation from a coding tree unit (CTU) to a coding unit (CU) may be performed through a rate-distortion optimization (RDO) process to select a segmentation structure with a smallest rate-distortion cost (RD cost) value within allowable size and depth conditions so as to determine a final coding unit.

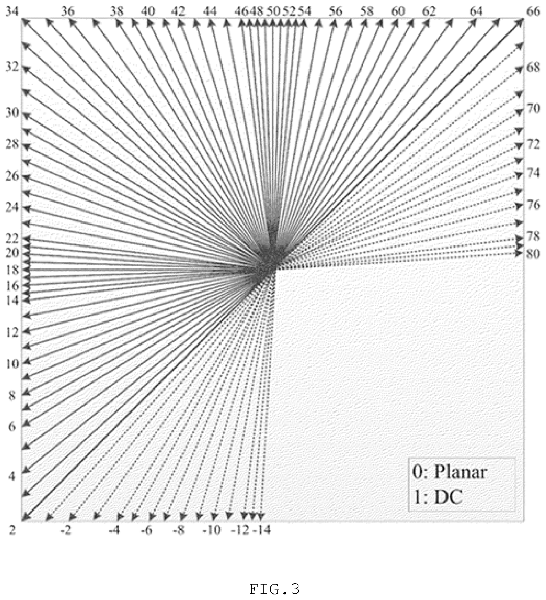

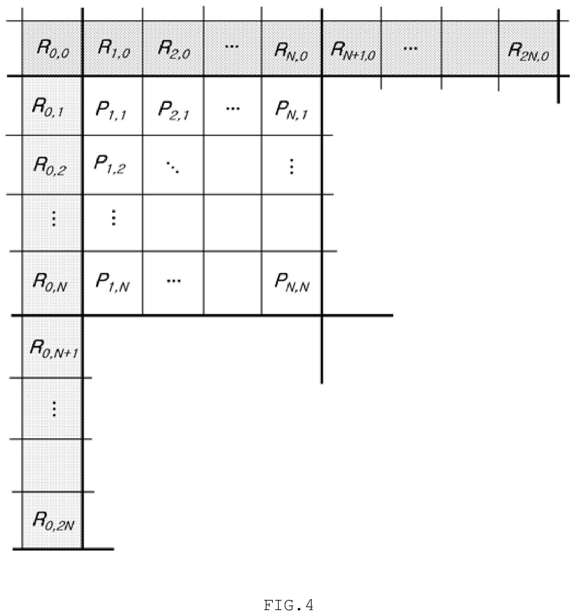

Hereinafter, embodiments of an intra prediction method will be described in more detail with reference to FIGS. 3 and 4.

For intra prediction, intra prediction mode information indicating an intra prediction direction may be signaled, and the intra prediction mode information indicates any one of a plurality of intra prediction modes constituting an intra prediction mode set.

As shown in FIG. 3, the intra prediction mode set may include a planar mode, a DC mode, and 65 directional modes, and each intra prediction mode may be indicated through an intra prediction mode index.

For example, intra prediction mode index "0" may indicate a planar mode, intra prediction mode index "1" may indicate a DC mode, and intra prediction mode indexes "2" to "66" may indicate different directional modes, respectively.

The directional modes respectively indicate different angles within a preset angular range, for example, a directional mode may indicate an angle within an angular range from 45 degrees to -135 degrees in a clockwise direction.

In this case, the intra prediction mode index "2" may indicate a horizontal diagonal (HDIA) mode, the intra prediction mode index "18" may indicate a horizontal (HOR) mode, the intra prediction mode index "34" may indicate a diagonal (DIA) mode, the intra prediction mode index "50" may indicate a vertical (VER) mode, and the intra prediction mode index "66" may indicate a vertical diagonal (VDIA) mode.

When a current block is a non-square block, 20 wide angular modes indicating an angle exceeding 45 degrees in a clockwise direction or below -135 degrees may be additionally used.

Based on the foregoing intra prediction mode information, reference samples to be used for intra prediction for the current block are determined.

For example, when the intra prediction mode index indicates a specific directional mode, a reference sample corresponding to the corresponding angle from a current sample of the current block is used for prediction for the current sample.

As described above, surrounding already restored samples may be used as reference samples for intra prediction, and the reference samples may be restored samples located to a left or a top of the current block.

Referring to FIG. 4, the reference samples may be samples adjacent to a left boundary and a top boundary of the current block.

For example, when a size of the current block is NxN and samples of a single reference line adjacent to the current block are used for intra prediction, reference samples may be set using (2N*2+1) surrounding samples located on a left (L), a top (T), and a top-left (TL) of the current block.

Meanwhile, samples of multiple reference lines (MRLs) may be used for intra prediction of the current block, and the multiple reference lines may consist of n reference lines located within a preset range from the current block. In this case, separate reference line index information indicating reference lines to be set as reference pixels may be signaled.

Additionally, when at least some of samples to be used as reference samples have not yet been restored, reference samples may be acquired through a reference sample padding process, and a reference sample filtering process may be performed to reduce errors in intra prediction.

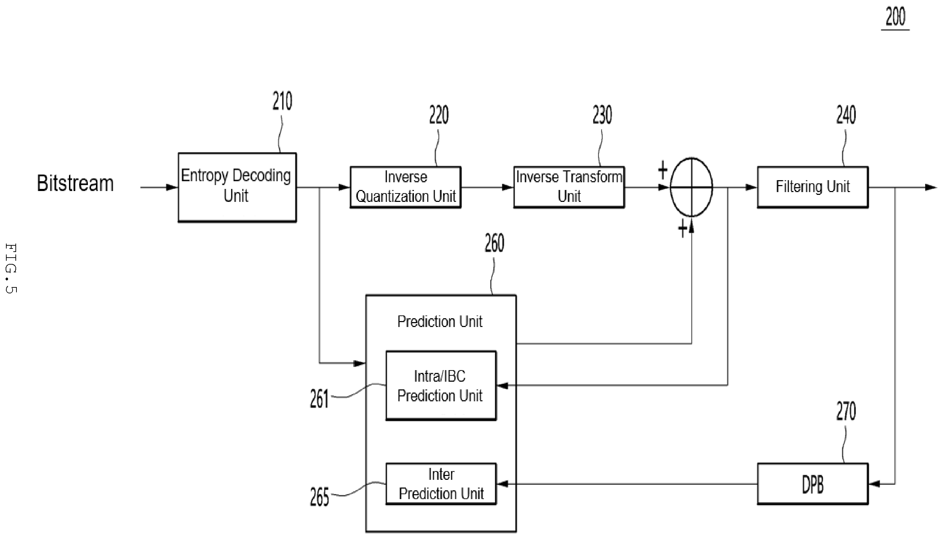

FIG. 5 is a block diagram showing a decoding device according to one embodiment of the present disclosure, which aims to explain a configuration and operation of a video decoder for encoding a video.

Referring to FIG. 5, a video decoder 200 may be configured to include an entropy decoding part 210, an inverse quantization part 220, an inverse transform part 230, a filtering part 240, a prediction part 260, a decoded picture buffer (DPB) 270.

The entropy decoding part 210 entropy decodes a bitstream to extract transform coefficient information, intra

coding information, inter coding information, and the like for each area.

For example, the entropy decoding part 210 may acquire a binary code for transform coefficient information of a specific area from a bitstream, and may acquire a quantized transform coefficient by inverse binarizing the binary code.

The inverse quantization part 220 inverse quantizes the quantized transform coefficient, and the inverse transform part 230 restores a residual value using the inverse quantized transform coefficient.

Meanwhile, the residual value acquired from the inverse transform part 230 is added to a prediction value acquired from the prediction part 260 to restore the original pixel value.

The filtering part 240 performs a filtering operation using a deblocking filter, a sample adaptive offset, an adaptive loop filter, and the like to improve an image quality of the restored picture, and the filtered picture may be output or stored in the DPB 270 to be used as a reference picture for a next picture.

The prediction part 260 includes an intra/IBC prediction part 261 and an inter prediction part 265, and generates a prediction picture by utilizing an coding type decoded through the entropy decoding part 210, a transform coefficient for each area, intra/inter coding information, and the like.

In order to restore a current block for which decoding is performed, the decoded area of a current picture including the current block or other pictures may be used. A picture (or tile/slice) that performs intra prediction or intra BC prediction using only the current picture for restoration is called an intra picture or I picture (or tile/slice), and a picture (or tile/slice) that can perform all of intra prediction, inter prediction, and intra BC prediction is called an inter picture (or tile/slice).

Meanwhile, a picture (or tile/slice) that uses at most one motion vector and reference picture index to predict sample values of each block among inter-pictures (or tiles/slices) is called a predictive picture or P picture (or tile/slice), and a picture (or tile/slice) that uses at most two motion vectors and reference picture indices is called a bi-predictive picture or B picture (or tile/slice).

That is, a P picture (or tile/slice) uses at most one set of motion information to predict each block, and a B picture (or tile/slice) uses at most two sets of motion information to predict each block. Here, the motion information set may include one or more motion vectors and one reference picture index.

The intra/IBC prediction part 261 may generate a prediction block using intra coding information and restored samples within the current picture, and the intra coding information may include at least one of an intra prediction mode, a most probable mode (MPM) flag, and an MPM index.

The intra/IBC prediction part 261 may predict sample values of the current block using restored samples located on a left and/or a top of the current block as reference samples.

For example, the reference samples may be samples adjacent to a left boundary of the current block and/or samples adjacent to a top boundary thereof, and may be samples located on a line within a preset distance from the left boundary of the current block and/or samples located on a line within a preset distance from the top boundary of the current block among samples neighboring blocks of the current block. In this case, the neighboring blocks of the current block may include at least one of a left (L) block, an above (A) block, a below-left (BL) block, an above-right (AR) block, or an above-left (AL) block adjacent to the current block.

Additionally, the intra/IBC prediction part 261 may restore a current area by referring to a specific area including restored samples within the current picture. To this end, the intra/IBC prediction part 261 may perform IBC prediction using IBC coding information acquired from the entropy decoding part 210, and the IBC coding information may include block vector information.

The inter prediction part 265 may generate a prediction block using a reference picture and inter coding information stored in the DPB 270, and the inter coding information may include a set of motion information (reference picture index, motion vector information, etc.) of the current block for the reference block.

Meanwhile, inter prediction may include L0 prediction, L1 prediction, and bi-prediction.

The L0 prediction is a prediction using one reference picture included in an L0 picture list, and the L1 prediction is a prediction using one reference picture included in an L1 picture list. To this end, one set of motion information (e.g., motion vectors and reference picture indices) may be required.

In a bi-prediction method, at most two reference areas may be used, and the two reference areas may exist in the same reference picture or may exist in different pictures. Accordingly, in at most two sets of motion information used in the bi-prediction method, two motion vectors may correspond to the same reference picture index or may correspond to different reference picture indices.

In this case, the reference pictures, which are pictures located temporally before or after the current picture, may be completed pictures that have already been restored, and the two reference areas used in the bi-prediction method may be areas selected from the L0 picture list and the L1 picture list, respectively.

The inter prediction part 265 may acquire a reference block of the current block using a motion vector and a reference picture index, and the reference block exists within a reference picture corresponding to the reference picture index.

Additionally, a sample value of a block specified by a motion vector or its interpolated value may be used as a predictor of the current block. For motion prediction with pixel accuracy in subpel units, an 8-tap interpolation filter may be

used for a luma signal and a 4-tap interpolation filter may be used for a chroma signal.

Meanwhile, the configuration and operation of the decoder described with reference to FIG. 5 are according to one embodiment of the present disclosure, and some configurations may be omitted or added as needed, and the decoder may decode a video by performing a reverse process of the foregoing encoding method of the encoder.

Hereinafter, embodiments of a method for determining a transform kernel for a current block will be described. The transform kernel determination method described below may be performed by a transform unit (110) of a video encoder (100) shown in FIG. 1 or by an inverse transform unit (230) of a video decoder (200) shown in FIG. 5.

A transform kernel used for a primary transform (i.e., a primary transform) may be determined based on a Multiple Transform Selection (MTS) set. However, the present disclosure is not limited thereto, and the transform kernel determination method for a secondary transform according to embodiments of the present disclosure described below may also be applied to selection of a transform kernel for the primary transform.

Unlike the primary transform, the secondary transform may use a non-separable kernel rather than separable kernels in horizontal and vertical directions. The secondary transform may be referred to as a Low-Frequency Non-Separable Transform (LFNST), and a transform kernel may be determined based on an LFNST set.

Meanwhile, the primary transform may also use a non-separable transform kernel, similar to the Low-Frequency Non-Separable Transform (LFNST). This may be referred to as a Non-Separable Primary Transform (NSPT).

In the following description, a process of determining a transform kernel applied to a secondary transform such as LFNST may be mainly described, but a process of selecting a transform kernel using an intra prediction mode derived in consideration of a directionality included in any one of a coefficient, a neighboring pixel, or a predicted value of the current block according to embodiments of the present disclosure may also be applied to a case of selecting a transform kernel used in a transform process such as MTS and NSPT.

According to one embodiment of the present disclosure, as a transform kernel used for a secondary transform of a current block, one of a plurality of transform kernels included in a plurality of secondary transform sets may be used. One of the plurality of secondary transform sets may be determined based on any one of an intra prediction mode of the current block, an intra prediction mode derived for the current block, or an index based on a combination of the intra prediction mode and the derived intra prediction mode.

Table 1 shows an example of correspondence relationships between secondary transform sets according to intra prediction modes. In Table 1, predModeIntra is an intra prediction mode of the current block, and 2ndTrSetIdx is an index indicating one of a plurality of secondary transform sets.

[Table 1]

| predModeIntra | 2ndTrSetIdx |
|---|---|
| predModeIntra <-1 | 2 |
| predModeIntra in [0, 34] | predModeIntra |
| predModeIntra in [35, 66] | 68-predModeIntra |

According to one embodiment of the present disclosure, a plurality of secondary transform sets may be defined, and as an example, a total of 35 secondary transform sets may be defined. The secondary transform sets may be LFNST kernel sets. Each secondary transform set may include a plurality of transform kernels. For example, each secondary transform set may include three transform kernels. The three transform kernels may each include LFNST4, LFNST8, and LFNST16, which are applied to 4xN/Nx4 (N>=4), 8xN/Nx8 (N>=8), and MxN (M, N>=16).

A secondary transformation set index 2ndTrSetIdx indicating one of 35 secondary transformation sets may be determined according to a value of an intra prediction mode predModeIntra of the current block.

Referring to Table 1, when intra prediction modes consisting of 67 from 0 to 66 are included and 35 secondary transform sets from 0 to 34 are included, a secondary transform set having an index of 2 may be determined for intra prediction modes below 0, a secondary transform set having the same index as an intra prediction mode number predModeIntra may be determined for intra prediction modes from 0 to 34, and a secondary transform set having an index of 68-predModeIntra may be determined for intra prediction modes from 35 to 66.

As mentioned above, each secondary transform set may include a plurality of transform kernels. Which kernel to select from among a plurality of transform kernels included in one secondary transform set may be signaled by using a transform kernel index lfnst_idx.

According to one embodiment of the present disclosure, an intra prediction mode of the current block may be derived by using any one of a decoder side intra prediction (DIMD) method, a template-based intra mode derivation (TIMD) method, an occurrencebased intra coding (OBIC) method, and an intra template matching method, and one of a plurality of secondary transform sets may be determined based on the derived intra prediction mode.

According to one embodiment of the present disclosure, DIMD, TIMD, OBIC, and intra template matching may be

applied to restored neighboring pixels of the current block, a predicted value of the current block, and a coefficient acquired by performing a primary transform on a transform block of the current block to determine the directionality of the current block and determine an intra prediction mode having a directionality most similar to the directionality of the current block as the derived intra prediction mode derivedModeIntra.

According to one embodiment of the present disclosure, when a prediction mode of the current block is an inter prediction mode, an intra prediction mode derivedModeIntra derived according to any one of the aforementioned methods of DIMD, TIMD, OBIC, and intra template matching may be set as an intra prediction mode predModeIntra of the current block, and one of a plurality of secondary transform sets may be determined based on the derived intra prediction mode derivedModeIntra as shown above in Table 1. When the current block is inter-predicted without being limited to Table 1 mentioned above, separate secondary transform sets having mapping relationships different from Table 1 mentioned above may be set. That is, a mapping relationship of a secondary transform set according to an intra prediction mode derivedModeIntra derived for an inter prediction block may be set differently from a mapping relationship of a secondary transformation set according to an intra prediction mode of an intra prediction block.

According to one embodiment of the present disclosure, when a prediction mode of the current block is an inter prediction mode, a secondary transform set may be determined by using information from a tool related to inter prediction. For example, the directionality of the current block may be determined based on one or more information items such as a skip mode, a merge mode, enhanced combined inter-intra prediction (CIIP), a combination of only intra blocks or inter blocks in CIIP, a spatial geometric partitioning mode (SGPM), and a combination of only inter-intra, intra-blocks or inter blocks in SGPM, an intra prediction mode having a most similar directionality may be derived based on the determined directionality, and one of a plurality of secondary transform sets may be determined based on the derived intra prediction mode derivedModeIntra.

When a prediction mode of the current block is an intra prediction mode, one of a plurality of secondary transform sets may be determined by using an index acquired through a combination of an intra prediction mode predModeIntra of the current block and an intra prediction mode derivedModeIntra derived according to any one of the aforementioned methods of DIMD, TIMD, OBIC, and intra template matching. A secondary transform set mapped according to an index value may be preset.

For example, when an intra prediction mode of the current block is predModeIntra, an intra prediction mode derived according to any one of the methods of DIMD, TIMD, and OBIC is derivedModeIntra, and a predetermined weight is w, an index may be acquired according to the following equation: index = w * predModeIntra (1 - w) * derivedModeIntra, and a secondary transform set to be applied to the current block may be determined based on an index value from among a plurality of preset secondary transformation sets according to the index value. When a value of the index is not an integer, an index having an integer value may be acquired through a method of rounding, rounding down, or rounding up.

The weight w may be a preset value (e.g., 1/2) or may be set based on at least one of a size, shape, quantization parameter (QP), slice type, and intra prediction mode value of the current block, and primary transform information applied to the current block.

The aforementioned Equation may be modified as follows by using a predetermined scale value so as to determine an index value through a shift operation.

index= w*(scale)*predModeIntra (1-w)* (scale)* derivedModeIntra >>shift

In the aforementioned embodiments, a transform kernel determination process applied to a secondary transform such as LFNST has been mainly described, but the embodiments of the present disclosure may also be applied to a case of selecting a transform kernel used in a transform process such as MTS, NSPT. That is, a transform kernel used in MTS or NSPT may be selected by using an intra prediction mode derived in consideration of a directionality included in any one of a coefficient, a neighboring pixel, and a predicted value of the current block.

Meanwhile, whether to apply a secondary transform according to one embodiment of the present disclosure may be signaled independently for each intra and inter block. Whether to apply a secondary transform for intra/inter may be set and signaled in units of sequences, GOPs, pictures, slices, tiles, CTUs, CUs, and TUs. When whether to apply a secondary transform is signaled according to a setting unit, whether to apply the secondary transform may be determined for each setting unit. When a secondary transform is applied, from among a plurality of secondary transform sets, a secondary transform set to be applied to a current setting unit may be derived according to the aforementioned embodiments of the present disclosure, and a transform kernel index lfnst_idx, which is information on a transform kernel to be applied to the current block from among a plurality of kernels included in one secondary transform set, may be subsequently signaled.

Whether to apply a secondary transform may be explicitly signaled. Whether to apply a secondary transform may be explicitly and independently signaled for each intra and inter block. Whether to apply a secondary transform for intra/inter may be explicitly signaled in units of sequences, GOPs, pictures, slices, tiles, CTUs, CUs, and TUs.

Whether to apply a secondary transform may be implicitly determined. In a case where whether to apply a

secondary transform is implicitly determined, whether to apply the secondary transform may be derived independently for each intra and inter block. Whether to apply a secondary transform for intra/inter may be implicitly derived in units of sequences, GOPs, pictures, slices, tiles, CTUs, CUs, and TUs. Whether to apply a secondary transform may be derived by using one or more information items such as a size of a current block or neighboring block, a width, height, shape, QP, slice type, intra prediction mode value, primary transform information, location of transform coefficient, and value of transform coefficient of the current block.

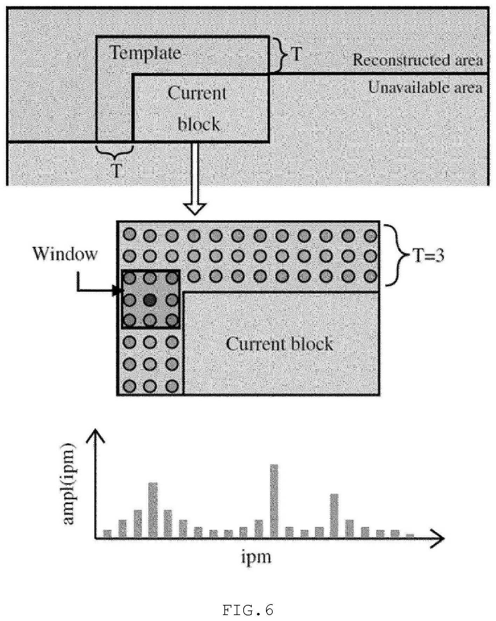

FIG. 6 is a diagram showing a process of deriving an intra prediction mode of a current block using DIMD according to one embodiment of the present disclosure.

According to one embodiment of the present disclosure, the transform unit 110 included in the video encoder 100 and the inverse transform unit 230 included in the video decoder 200 may determine the directionality of the current block using DIMD on a coefficient acquired by performing a primary inverse transform on restored neighboring pixels of the current block, a predicted value of the current block, and a transform block of the current block, and determine an intra prediction mode having a directionality most similar to the directionality of the current block as the derived intra prediction mode derivedModeIntra. Hereinafter, a case of applying DIMD to restored neighboring pixels of the current block will be mainly described, but the directionality of the current block may be derived by applying DIMD to a predicted value of the current block and coefficients acquired by performing a primary transform on the current block.

Referring to FIG. 6, a method of deriving an intra prediction mode of a current block using a DIMD method according to one embodiment of the present disclosure applies a filter for directionality detection to restored neighboring reference pixels of the current block to determine a horizontal and vertical direction intensity of the neighboring reference pixels, acquires a histogram of gradient (HoG) based on the horizontal direction intensity and vertical direction intensity, and determines an intra prediction mode corresponding to a gradient with a highest frequency in the histogram of gradient as an intra prediction mode indicating the directionality of the current block.

Referring to FIG. 6, the transform unit 110 or the inverse transform unit 230 sets a template having a predetermined size from among the restored neighboring pixels adjacent to a top and left of the current block. For example, as shown in FIG. 6, T=3, that is, a template including neighboring pixels within 3 pixel units from top and left boundaries of the current block may be determined. The transform unit 110 or the inverse transform unit 230 applies a filter for directionality detection in a horizontal or vertical direction at a 3x3 window location having the center in the pixels of the middle line of the template. The directional filter may be a Sobel filter. As a Sobel filter, one of a one-dimensional filter having coefficients of {1, 2, 1} or {-1, -2, - 1}, a two-dimensional filter having coefficients of {{1, 0, -1}, {2, 0, -2}, {1, 0, -1}} or {{-1, -2, -1}, {0, 0, 0}, {1, 2, 1}} may be used. The one-dimensional filter may be applied in each of the horizontal and vertical directions to determine intensities of pixels in the filter in the horizontal and vertical directions. Among the two-dimensional filters, a Sobel filter with coefficients of {{1, 0, -1}, {2, 0, -2}, {1, 0, -1}} is used to determine the intensity in the vertical direction, and a Sobel filter with coefficients {{-1, -2, -1}, {0, 0, 0}, {1, 2, 1}} may be used to determine the intensity in the horizontal direction.

The transform unit 110 or the inverse transform unit 230 determines a horizontal direction intensity $G_{hor}$ and a vertical direction intensity $G_{ver}$ for each window location, and determines arctan $G_{ver}/G_{hor}$ as a value indicating a directionality (angle) at each window location to which the directional filter is applied. The transform unit 110 or inverse transform unit 230 determines arctan $G_{ver}/G_{hor}$, that is, an intra prediction mode (ipm) having a most similar directionality to the directionality acquired by applying a directional filter. Furthermore, the transform unit 110 or the inverse transform unit 230 adds a sum of an absolute value of the horizontal direction intensity $G_{hor}$ and an absolute value of the vertical direction intensity $G_{ver}$ to a frequency value (amp(ipm)) of a histogram according to an intra prediction mode (ipm). The transform unit 110 or the inverse transform unit 230 determines, when a histogram of gradient (HoG) is acquired based on horizontal and vertical direction intensities at all window locations, an intra prediction mode having a highest frequency value in the histogram of gradient as an intra prediction mode indicating the directionality of the current block.

As described above, a process of deriving an intra prediction mode of the current block using DIMD is not limited to restored neighboring pixels, but may be applied to a predicted value of the current block or a coefficient acquired by performing a primary transform on a transform block of the current block to derive an intra prediction mode related to the directionality of the current block.

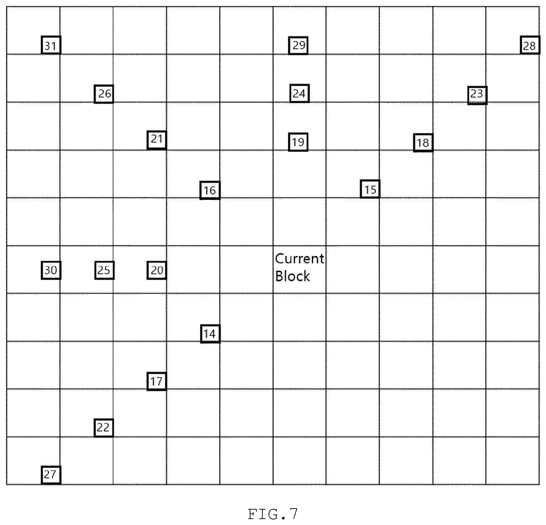

FIG. 7 is a diagram showing an example of neighboring blocks used to derive an intra prediction mode of a current block using OBIC according to one embodiment of the present disclosure.

The transform unit 110 or the inverse transform unit 230 may derive an intra prediction mode of the current block according to a frequency of occurrence of sample-wise intra prediction modes included in neighboring blocks that are adjacent to or not adjacent to the current block. That is, the transform unit 110 or the inverse transform unit 230 may acquire an occurrence histogram (OG) of intra prediction modes of pixels included in neighboring blocks at predetermined locations, and determine an intra prediction mode corresponding to a largest occurrence histogram as an intra prediction mode indicating the directionality of the current block. For example, as shown in FIG. 7, the transform unit 110 or the inverse transform unit 230 may check an intra prediction mode applied to a pixel location at a predetermined location around the current block, calculate a frequency value according to each intra prediction mode by adding a size of samples encoded by

that intra prediction mode to a frequency value of the histogram of that intra prediction mode, and determine an intra prediction mode with a highest frequency value as an intra prediction mode of the current block. The locations of neighboring samples checked in the intra prediction mode are not limited to those shown in FIG. 7 and may be changed.

As described above, a process of deriving an intra prediction mode of the current block using OBIC is not limited to restored neighboring pixels, but may be applied to a predicted value of the current block or a coefficient acquired by performing a primary transform on a transform block of the current block to derive an intra prediction mode related to the directionality of the current block.

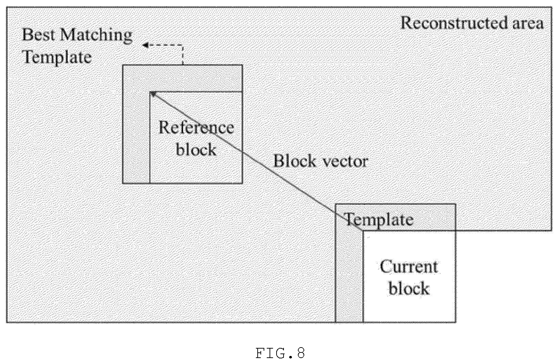

FIG. 8 is a diagram showing a process of deriving an intra prediction mode of a current block using intra template matching according to one embodiment of the present disclosure.

The transform unit 110 or the inverse transform unit 230 may determine an intra prediction mode of a reference block as an intra prediction mode indicating the directionality of the current block through a template matching process.

Referring to FIG. 8, a template area may be defined around a current block, and a prediction block (reference block) may be determined by searching for a template (best matching template) area that most closely matches the template area of the current block in a restored neighboring area (reconstructed area) within the same screen. Furthermore, an intra prediction mode of the prediction block (reference block) may be determined as a derived intra prediction mode of the current block. If the samples of the prediction block have different intra prediction modes, a frequency of occurrence of intra prediction modes per sample may be calculated similarly to the aforementioned OBIC, and an intra prediction mode with a highest frequency may be determined as a derived intra prediction mode. Alternatively, an intra prediction mode applied to a block including a pixel at a predetermined location within a prediction block may be determined as a derived intra prediction mode. For example, an intra prediction mode applied to a block including a top-left pixel of a prediction block may be determined as a derived intra prediction mode.

As described above, a process of deriving an intra prediction mode of the current block using intra template matching is not limited to restored neighboring pixels, but may be applied to a predicted value of the current block or a coefficient acquired by performing a primary transform on a transform block of the current block to derive an intra prediction mode related to the directionality of the current block.

According to a TIMD method according to one embodiment of the present disclosure, the transform unit 110 or the inverse transform unit 230 may generate each prediction template by applying the directionality of all candidate modes within a most probable mode (MPM) list to a reference pixel of a current template, calculate a sum of absolute transformed differences (SATD) between a pixel of the generated prediction template and a pixel of the previously restored template, and determine a mode with a smallest SATD among all candidate modes in the MPM list as an intra prediction mode of the current block.

The template used to derive an intra prediction mode for the current block using the TIMD method may be set to be the same as or different from the template area used in the intra template matching of FIG. 8. Alternatively, a size and shape of the template used in the TIMD method may be determined arbitrarily. The aforementioned TIMD method has used SATD when deriving an intra prediction mode based on a template using candidate modes within the MPM list, but is not limited thereto, and one of various error measurement methods such as a sum of absolute difference (SAD) or a sum of square error (SSE) may be used.

As described above, a process of deriving an intra prediction mode of the current block using TIMD is not limited to restored neighboring pixels, but may be applied to a predicted value of the current block or a coefficient acquired by performing a primary transform on a transform block of the current block to derive an intra prediction mode related to the directionality of the current block.

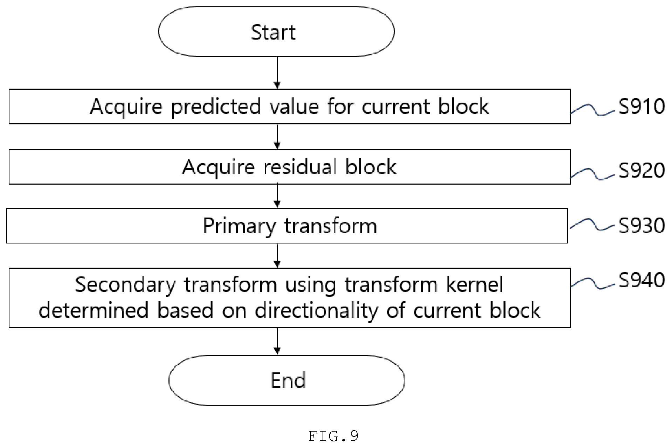

FIG. 9 is a flowchart of a video encoding method according to one embodiment of the present disclosure.

The prediction unit 160 of the video encoder 100 acquires a predicted value of a current block based on various prediction methods including intra prediction and inter prediction (S910).

The transform unit 110 acquires a residual block which is a difference between an input video signal and a predicted value generated by the prediction unit 160 (S920), and performs a primary transform on the residual block (S930). DCT2, DST7, DCT8, DST1, DCT5, DST4, and the like may be used during the primary transform. A transform kernel used for the primary transform may be determined based on a size of the current block or prediction mode information.

The transform unit 110 may determine a transform kernel to be used for a secondary transform based on the directionality of the current block, and perform a secondary transform on a result of the primary transform using the determined transform kernel (S940). Specifically, the transform unit 110 may determine the directionality of the current block by applying the aforementioned DIMD, TIMD, OBIC, and intra template matching to any one of the restored neighboring pixels of the current block, the predicted value of the current block, and the transform coefficient acquired by performing a primary transform on the transform block of the current block, and determine an intra prediction mode having the directionality most similar to the determined directionality as a derived intra prediction mode derivedModeIntra.

The transform unit 110 may set, when a prediction mode of the current block is an inter prediction mode, the derived intra prediction mode derivedModeIntra as an intra prediction mode predModeIntra of the current block, and

determine one of a plurality of secondary transform sets as shown above in Table 1. When the current block is inter-predicted without being limited to Table 1 mentioned above, separate secondary transform sets having mapping relationships different from Table 1 mentioned above may be set.

The transform unit 110 may determine, when a prediction mode of the current block is an intra prediction mode, one of a plurality of secondary transform sets using an index acquired through a combination of an intra prediction mode predModeIntra of the current block and an intra prediction mode derivedModeIntra derived according to any one of the aforementioned methods of DIMD, TIMD, OBIC, and intra template matching. A secondary transform set mapped according to an index value may be preset. As described above, when an intra prediction mode of the current block is predModeIntra, an intra prediction mode derived according to any one of the methods of DIMD, TIMD, and OBIC is derivedModeIntra, and a predetermined weight is w, an index may be acquired according to the following equation: index = w * predModeIntra (1 - w) * derivedModeIntra, and a secondary transform set to be applied to the current block may be determined from among a plurality of preset secondary transformation sets based on the index.

Additionally, when one secondary transform set is determined, the transform unit 110 may determine an optimal transform kernel in terms of encoding efficiency by applying a plurality of transform kernels included in the secondary transform set, and signal by including secondary transform index information indicating the determined transform kernel in a bitstream. For example, when each secondary transform set includes three transform kernels, 1 to 3 may be set as secondary transform indices indicating each of the three transform kernels, and 0 may be set as secondary transform index information indicating that no transform kernel is used.

Meanwhile, when a prediction mode of the current block is an intra prediction mode, the transform unit 110 may skip, if an intra prediction mode predModeIntra of the current block and an intra prediction mode derivedModeIntra derived according to any one of the aforementioned methods of DIMD, TIMD, OBIC, and intra template matching are the same, a process of acquiring a separate index, and immediately determine a secondary transform set based on the intra prediction mode of the current block.

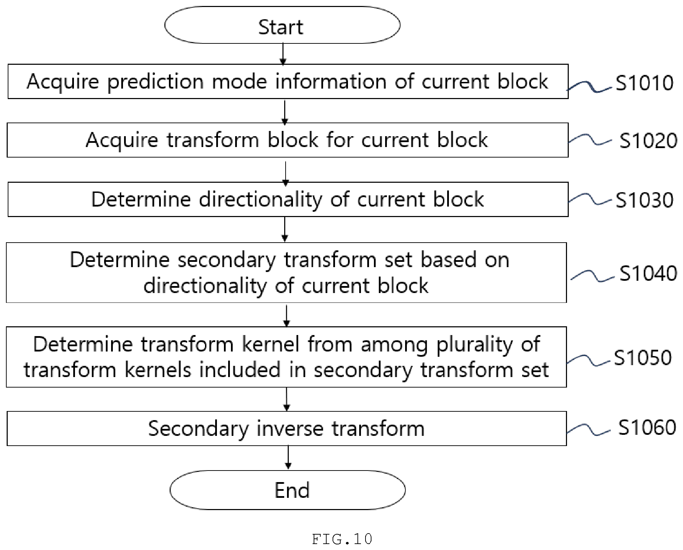

FIG. 10 is a flowchart of a video decoding method according to one embodiment of the present disclosure.

The entropy decoding unit 210 of the video decoder 200 entropy decodes a bitstream to extract information on prediction mode information of the current block and information on a quantized transform coefficient of the current block (S1010). The inverse quantization unit 220 inverse quantizes the quantized transform coefficient to acquire a transform block (S1020).

The inverse transform unit 230 performs an inverse transform on the inverse quantized transform block to restore a residual value. Specifically, the inverse transform unit 230 performs a primary inverse transform on the transform block, and determines the directionality of the current block to determine a transform kernel to be used for a secondary inverse transform (S1030). DCT2, DST7, DCT8, DST1, DCT5, DST4, and the like may be used for the primary inverse transform. The transform kernel used for the primary inverse transform may be determined based on a size of the current block or prediction mode information.

The inverse transform unit 230 may determine the directionality of the current block by applying the aforementioned DIMD, TIMD, OBIC, and intra template matching to one of the restored neighboring pixels of the current block, the predicted value of the current block, and the coefficient acquired by performing a primary inverse transform on the transform block of the current block, and determine an intra prediction mode having the directionality most similar to the determined directionality as a derived intra prediction mode derivedModeIntra.

The inverse transform unit 230 determines a secondary transform set using an intra prediction mode derived in relation to the directionality of the current block (S1040). Specifically, the inverse transform unit 230 may set, when a prediction mode of the current block is an inter prediction mode, the derived intra prediction mode derivedModeIntra as an intra prediction mode predModeIntra of the current block, and determine one of a plurality of secondary transform sets as shown above in Table 1. When the current block is inter-predicted without being limited to Table 1 mentioned above, separate secondary transform sets having mapping relationships different from Table 1 mentioned above may be set.

Additionally, when a prediction mode of the current block is an intra prediction mode, the inverse transform unit 230 may determine one secondary transform set from among a plurality of secondary transform sets using an index acquired through a combination of an intra prediction mode predModeIntra of the current block and an intra prediction mode derivedModeIntra derived according to any one of the aforementioned methods of DIMD, TIMD, OBIC, and intra template matching. A secondary transform set mapped according to an index value may be preset. As described above, when an intra prediction mode of the current block is predModeIntra, an intra prediction mode derived according to any one of the methods of DIMD, TIMD, and OBIC is derivedModeIntra, and a predetermined weight is w, an index may be acquired according to the following equation: index = w * predModeIntra (1 - w) * derivedModeIntra, and a secondary transform set to be applied to the current block may be determined from among a plurality of preset secondary transformation sets based on the index.

When a secondary transform set is determined, the inverse transform unit 230 may determine a transform kernel to be applied to the current block from among a plurality of transform kernels included in the secondary transform set based on a secondary transform index (S1050). Furthermore, the inverse transform unit 230 may acquire a residual signal by

applying the determined transform kernel to a result of the primary inverse transform and performing a secondary inverse transform (S1060).

Meanwhile, the residual value acquired from the inverse transform unit 230 is added to a prediction value acquired from the prediction unit 260 to restore the original pixel value.

The methods described herein may be performed by a processor of a video encoder or a video decoder. Further, the encoder may generate a bitstream that is decoded by a video signal processing method, and the bitstream generated by the encoder may be stored in a non-transitory computer-readable storage medium (recording medium).

The embodiments of the present disclosure described above may be implemented by various means. For example, embodiments of the present disclosure may be implemented by hardware, firmware, software, or a combination thereof.

In some embodiments, the present disclosure may be implemented in the form of a recording medium including computer-executable instructions, such as program modules, executed by a computer. The computer-readable medium may be any available medium that can be accessed by a computer, and includes both volatile and non-volatile media, and removable and non-removable media.

Further, the computer-readable medium may include both computer storage media and communication media. The computer storage media includes both volatile and non-volatile, removable and non-removable media implemented by any method or technology for storage of information such as computer-readable instructions, data structures, program modules, or other data. The communication media typically embodies computer-readable instructions, data structures, program modules, or other data in a modulated data signal, or other transmission mechanisms, and includes any information delivery media.

Although preferred embodiments of the present disclosure have been illustrated and described above, the present disclosure is not limited to the specific embodiments described above, and various modifications and variations may be made by those skilled in the art without departing from the spirit and scope of the present disclosure as defined in the appended claims. Such modifications and variations should not be understood individually from the technical idea or scope of the present disclosure.

## Claims

**1.** A video decoding method comprising:

acquiring prediction mode information on a current block;
acquiring a transform block for the current block;
determining, when the prediction mode information indicates that a prediction mode of the current block is inter prediction, the directionality of the current block based on at least one of the directionality of a coefficient acquired by performing a primary inverse transform on the transform block of the current block or the directionality of a neighboring pixel of the current block;
determining a secondary transform set to be applied to the current block from among a plurality of secondary transform sets based on the directionality of the current block;
determining a transform kernel applied to the current block from among a plurality of transform kernels included in the secondary transform set based on a secondary transform index; and
performing a secondary inverse transform on the transform block using the transform kernel.

**2.** The video decoding method of claim 1, wherein the determining of the directionality of the current block comprises:

applying a predetermined filter for determining a directionality to the primary inverse transformed coefficient of the current block or to the neighboring pixels of the current block to determine a horizontal direction intensity and vertical direction intensity;
acquiring a histogram of gradient (HoG) based on the horizontal direction intensity and vertical direction intensity; and
determining an intra prediction mode corresponding to a gradient with a highest frequency in the histogram of gradient as an intra prediction mode indicating the directionality of the current block.

**3.** The video decoding method of claim 2, wherein the predetermined filter is a Sobel filter, and wherein the Sobel filter is a one-dimensional filter having coefficients of {1, 2, 1} or {-1, -2, -1}, or a two-dimensional filter having coefficients of {{1, 0, -1}, {2, 0, -2}, {1, 0, -1}} or {{-1, -2, -1}, {0, 0, 0}, {1, 2, 1}}.

**4.** The video decoding method of claim 1, wherein the determining of the directionality of the current block determines a

template-based intra mode derivation (TIMD) intra prediction mode having a smallest sum of absolute transformed differences (SATD) from among TIMD intra prediction modes derived based on TIMD as an intra prediction mode indicating the directionality of the current block.

**5.** The video decoding method of claim 1, wherein the determining of the directionality of the current block acquires an occurrence histogram (OG) of intra prediction modes of pixels included in blocks at predetermined locations from among spatially neighboring blocks of the current block, and determines an intra prediction mode corresponding to a largest occurrence histogram as an intra prediction mode indicating the directionality of the current block.

**6.** The video decoding method of claim 1, wherein the determining of a secondary transform set to be applied to the current block comprises:

determining an intra prediction mode corresponding to the directionality of the current block; and
determining one secondary transform set among a plurality of preset secondary transform sets according to the intra prediction mode.

**7.** The video decoding method of claim 6, wherein the determining of one of a plurality of preset secondary transform sets according to the intra prediction mode determines, when intra prediction modes consisting of 67 from 0 to 66 are included and 35 secondary transform sets from 0 to 34 are included, secondary transform set 2 for intra prediction modes below 0, determines a secondary transform set with the same number as the intra prediction mode number for intra prediction modes from 0 to 34, and determines a secondary transform set of (68-intra prediction mode) for intra prediction modes from 35 to 66.

**8.** The video decoding method of claim 1, wherein each of the plurality of secondary transform sets comprises three transform kernels, and further comprises:

acquiring a transform kernel index indicating one of three transform kernels from a bitstream; and
determining a transform kernel to be applied to the current block from among the three transform kernels based on the acquired transform kernel index.

**9.** The video decoding method of claim 1, further comprising:

determining, when the prediction mode information indicates that a prediction mode of the current block is intra prediction, the directionality of the current block based on at least one of the directionality of a coefficient acquired by performing a primary inverse transform on the transform block of the current block or the directionality of a neighboring pixel of the current block;
determining a secondary transform set to be applied to the current block from among a plurality of secondary transform sets based on the intra prediction mode of the current block and the directionality of the current block;
determining a transform kernel applied to the current block within the secondary transform set based on a secondary transform index; and
performing a secondary inverse transform on the transform block using the transform kernel.

**10.** The video decoding method of claim 9, wherein the determining of a secondary transform set to be applied to the current block comprises:
acquiring, when an intra prediction mode of the current block is predModeIntra, an intra prediction mode having a most similar directionality to the directionality of the current block is derivedModeIntra, and a predetermined weight is w, an index indicating a combination of the intra prediction mode of the current block and the directionality of the current block according to the following equation: index = w * predModeIntra (1 - w) * derivedModeIntra, and determining a secondary transformation set to be applied to the current block from among a plurality of preset secondary transformation sets based on the index.

**11.** The video decoding method of claim 10, wherein the weight w is a preset value or is set based on at least one of a size, shape, quantization parameter (QP), slice type, and intra prediction mode value of the current block, and primary transform information applied to the current block.

**12.** A video decoding device performing the method of any one of claims 1 to 11.

**13.** A computer-readable recording medium on which a program for executing the method of any one of claims 1 to 11 is

recorded on a computer.

**14.** A video encoding method comprising:

acquiring a predicted value for a current block;
acquiring a residual block for the current block based on the predicted value;
performing a primary transform on the residual block; and
performing a secondary transform on a result value acquired through the primary transform, and
wherein the performing of the secondary transform comprises:

determining, when a prediction mode of the current block is inter prediction, the directionality of the current block based on at least one of the directionality of a coefficient acquired by performing a primary transform on the residual block or the directionality of a neighboring pixel of the current block;
determining a secondary transform set to be applied to the current block from among a plurality of secondary transform sets based on the directionality of the current block;
determining a transform kernel applied to the current block within the secondary transform set based on a secondary transform index; and
performing a secondary transform on the transform block using the transform kernel.

**15.** A video encoding device performing the method of claim 14.

**16.** A computer-readable recording medium on which a program for executing the method of claim 14 is recorded on a computer.

100
110
Transform Unit
120
Quantization Unit
180
Entropy Coding Unit
Bitstream
130
Inverse Quantization Unit
140
Inverse transform Unit
+
-
Prediction Unit
161
Intra/IBC Prediction Unit
165
Inter Prediction Unit
160
+
+
Input video
170
DPB
150
Filtering Unit

FIG.1

FIG.2

34
36
38
40
42
44
46
48
50
52
54
56
58
60
62
64
66
32
30
28
26
24
22
20
18
16
14
12
10
8
6
4
2
68
70
72
74
76
78
80
-2
-4
-6
-8
-10
-12
-14
0: Planar
1: DC

FIG.3

| $R_{0,0}$ | $R_{1,0}$ | $R_{2,0}$ | ··· | $R_{N,0}$ | $R_{N+1,0}$ | ··· | | $R_{2N,0}$ |
|---|---|---|---|---|---|---|---|---|
| $R_{0,1}$ | $P_{1,1}$ | $P_{2,1}$ | ··· | $P_{N,1}$ | | | | |
| $R_{0,2}$ | $P_{1,2}$ | ⋱ | | ⋮ | | | | |
| ⋮ | ⋮ | | | | | | | |
| $R_{0,N}$ | $P_{1,N}$ | ··· | | $P_{N,N}$ | | | | |
| $R_{0,N+1}$ | | | | | | | | |
| ⋮ | | | | | | | | |
| | | | | | | | | |
| $R_{0,2N}$ | | | | | | | | |

FIG.4

200
Bitstream
Entropy Decoding Unit
210
Inverse Quantization Unit
220
Inverse Transform Unit
230
Filtering Unit
240
Prediction Unit
260
Intra/IBC Prediction Unit
261
Inter Prediction Unit
265
DPB
270
+
+

FIG.5

Template
T
Reconstructed area
Unavailable area
Current
block
T
Window
T=3
Current block
ampl(ipm)
ipm

FIG.6

31
29
28
26
24
23
21
19
18
16
15
30
25
20
Current Block
14
17
22
27

FIG.7

Reconstructed area
Best Matching
Template
Reference
block
Block vector
Template
Current
block

FIG.8

Start
Acquire predicted value for current block
S910
Acquire residual block
S920
Primary transform
S930
Secondary transform using transform kernel determined based on directionality of current block
S940
End

FIG.9

Start
Acquire prediction mode information of current block
S1010
Acquire transform block for current block
S1020
Determine directionality of current block
S1030
Determine secondary transform set based on directionality of current block
S1040
Determine transform kernel from among plurality of transform kernels included in secondary transform set
S1050
Secondary inverse transform
S1060
End

FIG.10

## INTERNATIONAL SEARCH REPORT

International application No. **PCT/KR2024/015842**

**A. CLASSIFICATION OF SUBJECT MATTER**

**H04N 19/61**(2014.01)i; **H04N 19/625**(2014.01)i; **H04N 19/117**(2014.01)i; **H04N 19/176**(2014.01)i; **H04N 19/157**(2014.01)i; **H04N 19/70**(2014.01)i

According to International Patent Classification (IPC) or to both national classification and IPC

**B. FIELDS SEARCHED**

Minimum documentation searched (classification system followed by classification symbols)

H04N 19/61(2014.01); H04N 19/103(2014.01); H04N 19/105(2014.01); H04N 19/107(2014.01); H04N 19/11(2014.01); H04N 19/119(2014.01); H04N 19/593(2014.01); H04N 19/625(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 인터 예측(inter prediction), 방향성(directionality), 이차 변환 집합(secondary transform set), 변환 커널(transform kernel), 히스토그램(histogram), 템플릿 기반 인트라 모드 유도(template-based intra mode derivation; TIMD)

**C. DOCUMENTS CONSIDERED TO BE RELEVANT**

| Category* | Citation of document, with indication, where appropriate, of the relevant passages | Relevant to claim No. |
|---|---|---|
| A | KR 10-2018-0085526 A (KAONMEDIA CO., LTD.) 27 July 2018 (2018-07-27) See paragraphs [0295] and [0305]; and claim 7. | 1-16 |
| A | KR 10-2023-0088816 A (TENCENT AMERICA LLC) 20 June 2023 (2023-06-20) See paragraph [0079]. | 1-16 |
| A | KR 10-2023-0058166 A (TENCENT AMERICA LLC) 02 May 2023 (2023-05-02) See paragraph [0093]; and claims 4-5. | 1-16 |
| A | KR 10-2021-0122797 A (WILUS INSTITUTE OF STANDARDS AND TECHNOLOGY INC. et al.) 12 October 2021 (2021-10-12) See paragraphs [0014] and [0055]. | 1-16 |
| A | KR 10-2021-0098967 A (LG ELECTRONICS INC.) 11 August 2021 (2021-08-11) See claim 1. | 1-16 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 January 2025** | **20 January 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/015842**

| Patent document cited in search report | Publication date (day/month/year) | Patent family member(s) | Publication date (day/month/year) |
|---|---|---|---|
| KR 10-2018-0085526 A | 27 July 2018 | KR 10-2019-0088338 A | 26 July 2019 |
| | | WO 2018-135885 A1 | 26 July 2018 |
| KR 10-2023-0088816 A | 20 June 2023 | CN 116547966 A | 04 August 2023 |
| | | EP 4409881 A1 | 07 August 2024 |
| | | EP 4409881 A4 | 25 December 2024 |
| | | JP 2024-535959 A | 04 October 2024 |
| | | US 12114014 B2 | 08 October 2024 |
| | | WO 2023-055881 A1 | 06 April 2023 |
| KR 10-2023-0058166 A | 02 May 2023 | EP 4189963 A1 | 07 June 2023 |
| | | EP 4189963 A4 | 14 February 2024 |
| | | JP 2023-547170 A | 09 November 2023 |
| | | US 12160561 B2 | 03 December 2024 |
| | | US 2023-0049154 A1 | 16 February 2023 |
| | | WO 2023-015163 A1 | 09 February 2023 |
| KR 10-2021-0122797 A | 12 October 2021 | US 11856224 B2 | 26 December 2023 |
| | | US 2024-0098305 A1 | 21 March 2024 |
| | | WO 2020-141892 A1 | 09 July 2020 |
| KR 10-2021-0098967 A | 11 August 2021 | US 11856224 B2 | 26 December 2023 |
| | | US 2024-098305 A1 | 21 March 2024 |
| | | WO 2020-141892 A1 | 09 July 2020 |

Form PCT/ISA/210 (patent family annex) (July 2022)